# EUROPEAN PATENT APPLICATION

(11) **EP 1 010 509 A2**
(43) Date of publication of application: **21.06.2000**
(21) Application number: 99108858.4
(22) Date of filing: 04.05.1999
(51) Int. Cl.: B28D 1/02

(54) **Slurry managing system and slurry managing method**

(30) Priority: 16.12.1998 JP 35754398
(71) Applicant: Nippei Toyama Corporation, Shinagawa-ku, Tokyo-to 140-0013 (JP)
(72) Inventor: Katsumata, Noboru, c/o Nippei Toyama Corporation, Yokosuka-shi, Kanagawa-ken 239-0832 (JP)
(74) Representative: Geyer, Werner, Dr.-Ing.

(57) **Abstract**

A managing system for managing slurry, which is used to cut workpieces, is described. The slurry includes a dispersing liquid and abrasive grains. A first decanter (46) centrifuges the used slurry to separate a mixture of impurities and dispersing liquid from the slurry and recover recyclable abrasive grains. A second decanter (47) centrifuges the mixture to separate impurities from the mixture and recover recyclable dispersing liquid. The properties (specific gravity or viscosity) of the mixture separated by the first decanter (46) or the dispersing liquid recovered by the second decanter (47) is detected. The temperature of the used slurry prior to delivery to the first decanter (46) or the amount of the used slurry delivered to the first decanter (46) is adjusted in accordance with the detected properties. This efficiently recovers recyclable abrasive grains and dispersing liquid from the used slurry.

## Description

### BACKGROUND OF THE INVENTION

The present invention relates to a system and method for managing slurry used to cut workpieces in cutting machines, such as wire saws or the like. More particularly, the present invention pertains to a slurry managing system and a slurry managing method that optimally separates impurities from used slurry.

A wire saw is typically employed to cut workpieces, such as silicon ingots, or the like, into wafers. The wire saw includes a plurality of rollers and a single strand of wire, which is spirally wound about the rollers with a predetermined pitch between each winding. The wire is guided by the rotation of the rollers. During rotation of the rollers, slurry containing abrasive grains is fed to the wire. In this state, a workpiece is pressed against the wire to cut the workpiece into a plurality of wafers simultaneously.

The slurry is an aqueous or oleaginous liquid (dispersing liquid) in which abrasive grains are dispersed. The wire saw is provided with a managing system to prepare and manage the slurry. The managing system includes a preparing tank, in which abrasive grains and dispersion liquid are mixed to prepare the slurry. The slurry prepared in the preparing tank is fed to the wire saw.

It is preferred that the used slurry, which has been used by the wire saw to cut workpieces, be recycled to reduce the costs of cutting the workpieces. However, used slurry includes impurities, which are fine grain components that are smaller than the abrasive grains. More specifically, the used slurry includes impurities such as cutting chips of workpieces and fragmented abrasive grains. The impurities decrease the cutting capability of the wire saw.

The management system includes a separating apparatus that separates the impurities from the used slurry and recovers the recyclable abrasive grains and dispersing liquid. The recovered abrasive grains and dispersing liquid are returned to the preparing tank to be mixed with additionally supplied fresh abrasive grains and dispersing liquid to be prepared as slurry again. The slurry is then fed to the wire saw from the preparation tank and thus recycled.

Fluctuations in the temperature of the used slurry or in the amount of impurities included in the used slurry change the properties (e.g., specific gravity or viscosity) of the used slurry. The changes in the properties of the used slurry alter the separating efficiency of the separating apparatus. This may hinder recovery of the abrasive grains and dispersing liquid from the used slurry or leave impurities in the recovered abrasive grains and dispersing liquid.

### SUMMARY OF THE INVENTION

Accordingly, it is an objective of the present invention to provide a slurry managing system and a slurry managing method that optimally separates impurities from used slurry and guarantees the recovery of recyclable abrasive grains and dispersing liquid.

To achieve the above objectives, the present invention provides a managing system for managing slurry used to cut a workpiece. The slurry includes a dispersing liquid and abrasive grains. The managing system includes a separating means for executing a separation process on the slurry after the slurry has been used to recover at least recyclable abrasive grains from the used slurry. A product of the separation process is a separation liquid. A detecting means detects a property of the separation liquid. An adjusting means adjusts the temperature of the used slurry prior to delivery to the separating means in accordance with the property detected by the detecting means.

In another aspect of the present invention, a managing system for managing slurry used to cut a workpiece is provided. The slurry includes a dispersing liquid and abrasive grains. The managing system includes a separating means for executing a separation process on the slurry after the slurry has been used to recover at least recyclable abrasive grains from the used slurry. A product of the separation process is a separation liquid. A detecting means detects a property of the separation liquid. An adjusting means adjusts the amount of the used slurry delivered to the separating means in accordance with the property detected by the detecting means.

In a further aspect of the present invention, a managing method for managing slurry used to cut a workpiece is provided. The slurry includes a dispersing liquid and abrasive grains. The managing method includes executing a separation process on the slurry after the slurry has been used to recover at least recyclable abrasive grains from the used slurry. A product of the separation process is a separation liquid. The managing method further includes detecting a property of the separation liquid, and adjusting the temperature of the used slurry prior to the separation process in accordance with the detected property.

In another aspect of the present invention, a managing method for managing slurry used to cut a workpiece is provided. The slurry includes a dispersing liquid and abrasive grains. The managing method includes executing a separation process on the slurry with a separating means after the slurry has been used to recover at least recyclable abrasive grains from the used slurry. A product of the separation process is a separation liquid. The managing method further includes detecting a property of the separation liquid, and adjusting the amount of the used slurry delivered to the separating means in accordance with the detected property.

### BRIEF DESCRIPTION OF THE DRAWINGS

The features of the present invention that are believed to be novel are set forth with particularity in the appended claims. The invention, together with objects and advantages thereof, may best be understood by reference to the following description of the presently preferred embodiments together with the accompanying drawings in which:
Fig. 1 is a diagrammatic view showing part of a slurry managing system according to a first embodiment of the present invention;
Fig. 2 is a diagrammatic view showing part of a slurry managing system of the first embodiment;
Fig. 3 is a diagrammatic view showing part of a slurry managing system of the first embodiment;
Fig. 4 is a block diagram showing the electric structure of the managing system of Figs. 1 to 3;
Fig. 5 is a flowchart illustrating the adjustment of the slurry temperature in the first embodiment;
Fig. 6 is a flowchart illustrating the adjustment of the slurry temperature in a second embodiment;
Fig. 7 is a flowchart illustrating the adjustment of the amount of the slurry supply in a third embodiment;
Fig. 8 is a flowchart illustrating the adjustment of the amount of the slurry supply in a fourth embodiment;
Fig. 9 is a diagrammatic view showing part of a slurry managing system in a fifth embodiment; and
Fig. 10 is a block diagram showing the electric structure of the slurry managing system of Fig. 9.

### DETAILED DESCRIPTION OF THE PREFERRED EMBODIMENTS

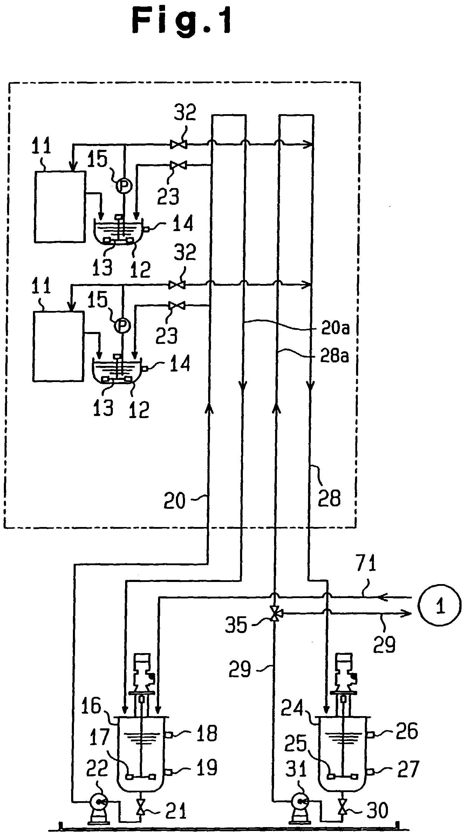

A first embodiment according to the present invention will now be described with reference to Figs. 1 to 5. The entire structure of the slurry managing system is shown in Figs. 1 to 3. As shown in Fig. 1, the managing system includes a plurality of wire saws 11 (two shown in the drawing). Each wire saw 11 has a slurry tank 12, which houses a rotatable agitator 13. A level sensor 14 is attached to the outer side of the slurry tank 12 to detect the liquid level of the slurry in the tank 12. A predetermined amount of slurry, which contains, for example, oleaginous dispersing liquid and abrasive grains is reserved in the slurry tank 12. The slurry in the tank 12 is sent to the associated wire saw 11 by a pump 15.

Although not shown in the drawings, each wire saw 11 has a plurality of rollers and a single strand of wire spirally wound about the rollers with a predetermined interval between each winding. When the rollers rotate and draw the wire, slurry is fed to the wire from the slurry tank 12. In this state, a workpiece is pressed against the wire to simultaneously slice the workpiece into wafers. During the cutting, the used slurry is recovered in the slurry tank 12 to be fed to the wire again. Thus, the slurry is used repetitively.

The slurry supplied to the wire saws 11 is reserved in a supply tank 16, which is arranged near the wire saw 211. The supply tank 16 sends slurry to the two slurry tanks 12 through a supply passage 20. A rotatable agitator 17 is accommodated in the supply tank 16. Two level sensors 18, 19 are attached to the outer side of the supply tank 16 to detect the liquid level of the slurry in the supply tank 16. A valve 21 and a pump 22 are arranged at the upstream end of the supply passage 20. The slurry in the supply tank 16 is supplied to each slurry tank 12 from the supply passage 20 through a valve 23. The supply passage 20 is connected to a recovery passage 20a, through which slurry is returned to the supply tank 16 from the supply passage 20.

A recovery tank 24 is arranged adjacent to the supply tank 16. A rotatable agitator 25 is housed in the recovery tank 24. Two level sensors 26, 27 are attached to the outer side of the recovery tank 24 to detect the liquid level of the slurry in the recovery tank 24. The recovery tank 24 is connected to a recovery passage 28, through which slurry is recovered from the slurry tank 12, and a conveying passage 29, through which the recovered slurry is sent to a separating/recovering mechanism 40, which will be described later. A valve 30 and a pump 31 are arranged at the upstream end of the conveying passage 29.

Repetitive usage of the slurry in the tank 12 increases the amount of impurities (i.e., workpiece chips and fragmented abrasive grains) in the slurry and affects the cutting performance of the wire saws 11. Therefore, all or some of the used slurry in each slurry tank 12 is sent to the recovery tank 24 through the pump 15, the valve 32, and the recovery passage 28 periodically or each time cutting is completed. The supply tank 16 replenishes each slurry tank 12 with fresh slurry in accordance with the amount of used slurry discharged from the slurry tank 12.

A circulation passage 28a extends between the recovery passage 28 and a valve 35, which is arranged in the conveying passage 29. Thus, slurry circulates through the recovery tank 24, the conveying passage 29, the circulation passage 28a, and the recovery passage 28.

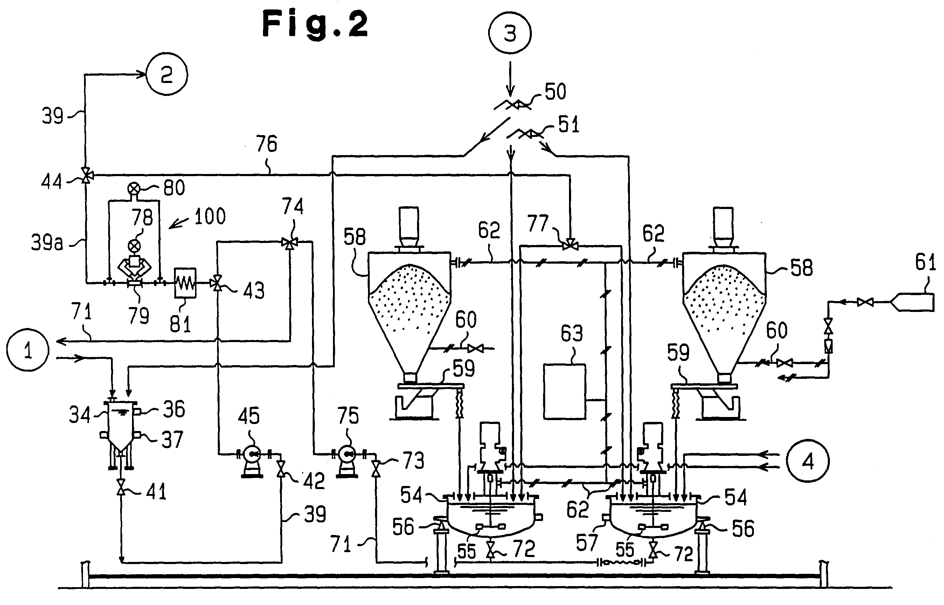

The conveying passage 29 is connected to a metering tank 34, which is shown in Fig. 2. The used slurry in the recovery tank 24 is sent into the metering tank 34 through the valve 30, the pump 31, and the valve 35, which are located in the conveying passage 29. A pair of level sensors 36, 37 are attached to the outer side of the metering tank 34 to detect the liquid level of the slurry in the tank 34. The level sensors 36, 37 are used during a slurry separation process, which will be described later, to meter the amount of used slurry treated during the execution of each separation process.

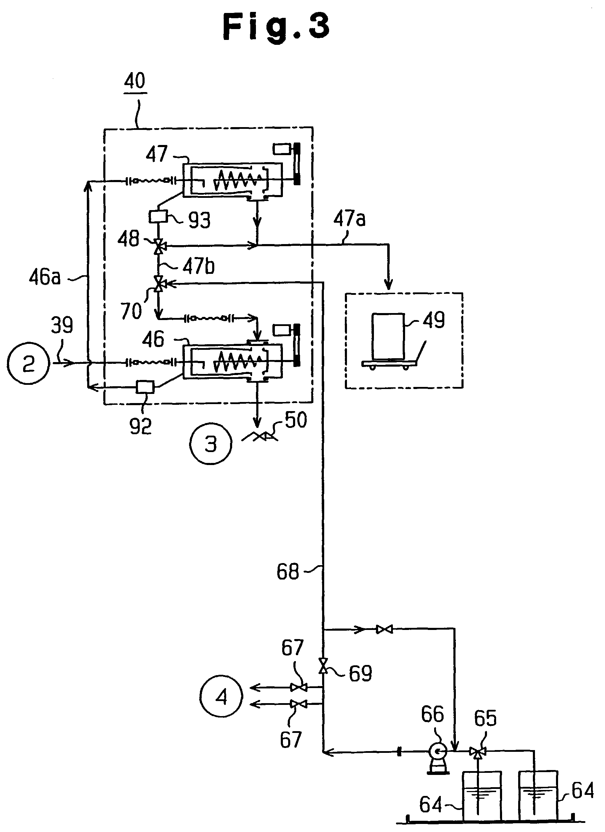

The metering tank 34 is connected to the separating/recovering mechanism 40, which is shown in Fig. 3, by a transfer passage 39. The transfer passage 39 includes a plurality of valves 41, 42, 43, 44 and a pump 45. When the used slurry in the metering tank 34 is transferred to the separating/recovering mechanism 40 through the transfer passage 39, the separating/recovering mechanism 40 removes impurities from the used slurry and recovers the recyclable abrasive grains and dispersing liquid. The impurities refer to fine grain components having a smaller size than the abrasive grains, such as workpiece cutting chips and fragmented abrasive grains.

The separating/recovering mechanism 40 includes a first decanter 46, or first separating means, and a second decanter 47, or second separating means. For example, screw conveyor type centrifugal separators are used as the first and second decanters 46, 47. The rotating speed of the second decanter 47 is higher than that of the first decanter 46.

The first decanter 46 centrifuges the used slurry sent from the transfer passage 39 into, for example, recyclable abrasive grains having a grain diameter of five micrometers or more and a turbid dispersing liquid (hereafter referred to as primary separation liquid) that contains fine particle components, which are smaller than the recyclable abrasive grains. The primary separation liquid separated by the first decanter is sent to a second decanter 47 through a passage 46a. The secondary decanter 47 centrifuges the primary separation liquid into impurities and pure, recyclable dispersing liquid to recover a recyclable dispersing liquid (hereafter referred to as secondary separation liquid).

The impurities separated by the second decanter 47 are sent to a containment tank 49 through a discharge passage 47a. The secondary separation liquid recovered by the second decanter 47 is sent to the first decanter 46 through a passage 47b. Valves 48, 70 are arranged in the passage 47b. The abrasive grains recovered by the first decanter 46 is mixed with the secondary separation liquid sent from the second decanter 47 and sent to a first switching valve 50 by the first decanter 46. Thus, the abrasive grains, which are solids, are easily sent out.

A first detector 92 for detecting the properties of the primary separation liquid is arranged in the passage 46a. A second detector 93 for detecting the properties of the secondary separation liquid is arranged in the passage 47b. The first and second detectors 92, 93 each have a specific gravity gage 78, a viscosity gage 79, and a viscosity gage 80.

As shown in Fig. 2, a second switching valve 51 is arranged downstream the first switching valve 50. The mixture of the abrasive grains and the secondary separation liquid, which is sent out of the first decanter 46, is sent selectively to the second switching valve 51 and the metering tank 34 by the first switching valve 50. The mixture of the abrasive grains and the secondary separation liquid, which is drawn into the second valve 51, is sent selectively to a pair of preparing tanks 54.

Each preparing tank 54 houses a rotatable agitator 55. A weight sensor 56 is attached to the outer side of the preparing tank 54. The weight sensor 56 detects the weight of the slurry in the preparing tank 54.

A hopper 58 containing fresh abrasive grains is arranged above each preparing tank 54. The fresh abrasive grains in the hopper 58 are fed into the associated preparing tank 54 through an oscillating feeder 59. Each hopper 58 is connected to an air supply passage 60, which leads to an air compressor 61. When abrasive grains are fed into the preparing tanks 54, the air compressor 61 sends compressed air into the hoppers 58 to aid the feeding of the abrasive grains. The hoppers 58 and the preparing tanks 54 are connected to a dust collector 63 by a suction passage 62. The abrasive grains (mainly fine fragmented abrasive grains) entrained in the hoppers 58 and the preparing tanks 54 are drawn out by the dust collector 63.

A pair of dispersing liquid tanks 64, which are shown in Fig. 21, are arranged adjacent to the preparing tanks 54. The dispersing liquid tanks 64 contain fresh dispersing liquid. The fresh dispersing liquid in the dispersing liquid tanks 64 is sent to each preparing tank 54, shown in Fig. 2, through a valve 65, a pump 66, and a pair of valves 67. The fresh abrasive grains from the hopper 58 and the fresh abrasive grain from the dispersing liquid tank 64 are agitated and mixed with the abrasive grains and dispersing liquid from the separating/recovery mechanism 40 in each preparing tank 54. As a result, slurry is prepared with the abrasive grains and the dispersing liquid having a predetermined ratio. The preparation of the slurry is performed alternately by the two preparing tanks 54.

The mixture ratio between the abrasive grains and the dispersing liquid in the preparing tanks is approximately 1:0.7 to 1:0.98 by weight. Grains made of a material such as silicon nitride or silicon carbide and having a size of, for example, #600, #800, or #1000, are used as the abrasive grains. Silicon oil (e.g., manufactured by Paresu Kagaku Kabushiki Kaisha, product number PS-LW-1) is used as the dispersing liquid.

As shown in Fig. 3, a valve 69 connects a bifurcating passage 68 to a supply passage, which extends from the dispersing liquid tank 64 to the preparing tank 54 of Fig. 2. The bifurcating passage 68 is connected to the passage 47b by way of the valve 70. The secondary separation liquid recovered by the second decanter 47, or the recyclable dispersing liquid, is periodically sent to the containment tank 49 through the discharge passage 47a from the valve 48. Simultaneously, the dispersing liquid in the dispersing liquid tank 64 is not only supplied to the preparing tank 54 but also sent to the first decanter 46 through the bifurcating passage 68 from the valve 70.

As shown in Figs. 1 and 2, the preparing tanks 54 are connected to the supply tank 16 by a supply passage 71. As shown in Fig. 2, the portions of the supply passage 71 connected to the two preparing tanks 54 are each provided with a valve 72. Valves 73, 74 and a pump 75 are also arranged in the supply passage 71. The slurry prepared in each preparing tank 54 is sent to the supply tank 16 through the supply passage 71.

A circulation passage 76 extends from the valve 74 of the supply passage 71 toward the two preparing tanks 54. The transfer passage 39 includes a common passage 39a, which also functions as the circulation passage 76, extending between the valves 43, 44. The circulation passage 76 is bifurcated by a valve 77 to extend toward each of the two preparing tanks 54. During preparation and after preparation of the slurry in the two preparing tanks 54, the slurry in the preparing tanks 54 is circulated through part of the supply passage 71 and through the circulation passage 76 by the pump 75.

A detector 100 is arranged in the common passage 39a to detect the properties of the slurry passing through the passage 39a. The detector 100 includes the specific gravity gage 78, the flow rate gage 79, and the viscosity gage 80. When used slurry is transferred to the separating/recovering mechanism 40 through the valve 43 and the transfer passage 39 or when the slurry in the preparing tanks 54 is circulated through part of the supply passage 71 and the circulation passage 76, the slurry's specific gravity, flow rate, and viscosity are detected by the specific gravity gage 78, the flow rate gage 79, and the viscosity gage 80, respectively.

A gage incorporating both specific gravity and flow rate gages 78, 79 may be employed. For example, a micromotion flow meter (manufactured by Kabushiki Kaisha Ohbaru), which simultaneously detects the specific gravity and flow rate of a liquid, may be employed. A pressure/differential-pressure transmitter 3051C (manufactured by Fisher-Rosemount Japan Kabushiki Kaisha) may be employed as the viscosity gage 80.

A temperature adjustor 81 is arranged in the common passage downstream of the detector 100. The temperature adjustor 81 heat or cools slurry by, for example, changing the temperature or flow rate of a heat medium for transferring heat to the slurry. When used slurry is transferred to the separating/recovering mechanism 40 through the transfer passage 39, the temperature adjustor 81 detects the temperature of the slurry. The temperature of the slurry reflects the nature, or viscosity, of the slurry.

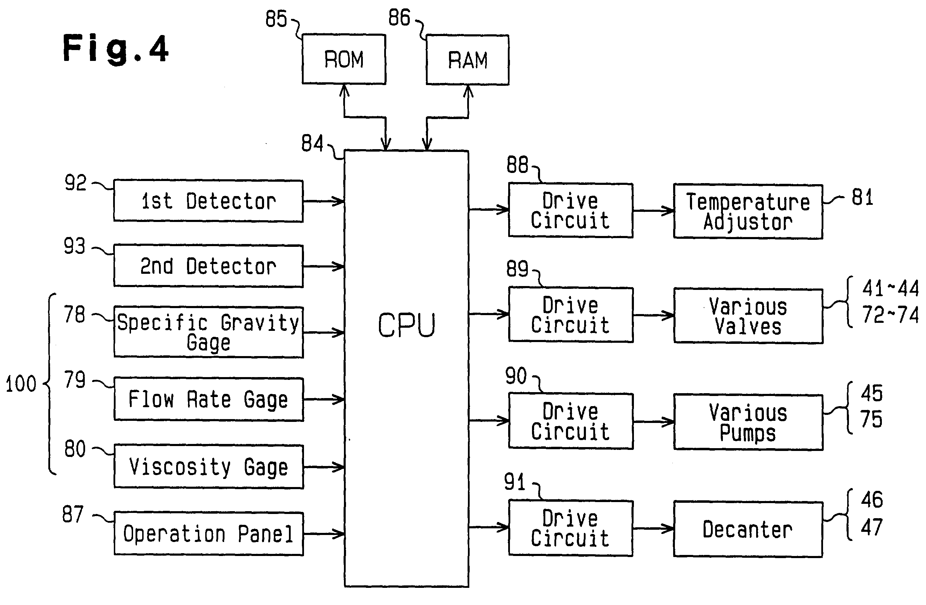

The electric structure of the above slurry managing system will now be described. As shown in Fig. 4, a central processing unit (CPU) 84 controls operation of the entire slurry managing system. Various types of control programs that are necessary for the operation of the slurry control system are stored in a read only memory (ROM) 85. Data obtained during execution of the control programs is temporarily stored in a random access memory (RAM) 86. The CPU 84, the ROM 85, and the RAM 86 form a control means.

The CPU 84 receives detection signals from the first detector 92, the second detector 93, the specific gravity gage 78, and the viscosity gage 80 and operation signals from an operation panel 87. The CPU 84 also sends actuation signals to the temperature detector 81, the valves, the pumps, and the two decanters 46, 47 by way of drive circuits 88, 89, 90, and 91, respectively. The valves and pumps include those shown in Figs. 1 to 3. However, only the reference numbers of valves and pumps that are especially related to the present invention are shown in Fig. 4.

When executing the separation process of the used slurry, the CPU 84 switches the valves 41 to 44 to open the transfer passage 39 that leads from the metering tank 34 to the separating/recovering mechanism 40. In this state, the CPU 84 actuates the pump 45 to transfer the used slurry from the metering tank 34 to the separating/recovering mechanism 40. When transferring the used slurry, the CPU 84 carries out a process by following the flowchart illustrated in Fig. 23. The process will be described later.

During execution of the used slurry separation process, the CPU 84 also displays the detection values obtained by the specific gravity gage 78, the flow rate gage 79, and the viscosity gage 80, and the detection values obtained by the first detector 92 and the second detector 93 on an indicator (not shown), which is provided on the operation panel 87.

The CPU 84 switches the valves 43, 44, 72-74 during preparation and after preparation of the slurry in the preparing tanks 54 to open the passageway that extends through part of the supply passage 71 and the circulation passage 76 from the preparing tanks 54 and returns to the preparing tanks 54. In this state, the CPU 84 actuates the pump 75 to circulate the slurry in the preparing tanks 54 through part of the supply passage 71 and through the circulation passage 76.

During circulation of the slurry, the CPU 84 detects the specific gravity, flow rate, and viscosity of the slurry with the specific gravity gage 78, the flow rate gage 79, and the viscosity gage 80, respectively. The CPU 84 then adjusts the amount of abrasive grains fed to the preparing tanks 54 from the hoppers 58 and the amount of dispersing liquid sent to the preparing tanks 54 from the dispersing liquid tanks 64. This keeps the slurry preparation ratio of the abrasive grains and the dispersing liquid in the preparing tanks 54 at an optimal value, that is, as described above, approximately 1:0.7 to 1:0.98 by weight.

The operation of the slurry managing system in this embodiment will now be described. When the cutting of workpieces begins in each wire saw 11, the slurry in the slurry tanks 12 is sent to the wires saws 11 and the slurry used by the wire saws 11 is returned to the slurry tanks 12. The used slurry in the slurry tanks 12 is sent to the recovery tank 24 periodically or each time cutting is completed. Additionally, the slurry tanks 12 are replenished with slurry, which is sent from the supply tank, in accordance with the recovered amount of the used slurry.

The used slurry in the recovery tank 24 is sent to the metering tank 34 from the conveying passage 29. The used slurry in the metering tank 34 is further sent to the separating/recovering mechanism 40 through the transfer passage 39. Recyclable abrasive grains and dispersing liquid are recovered from the used slurry by the first decanter 46 and the second decanter 47 in the separating/recovering mechanism 40. The recovered abrasive grains and dispersing liquid are returned to the preparing tanks 54 in a mixed state. In the preparing tanks 54, the recovered abrasive grains and dispersing liquid are mixed with fresh abrasive grains, which are sent from the hoppers 58, and with fresh dispersing liquid, which is sent from the dispersing liquid tanks 64 to prepare slurry having the appropriate preparation ratio.

During or after preparation of the slurry, the slurry in the preparing tanks 54 is circulated through the circulation passage 76. When the liquid level of the slurry in the preparing tanks 54 falls to a predetermined level or lower, the prepared slurry in the preparing tanks 54 is sent to the supply tank 16 through the supply passage 71.

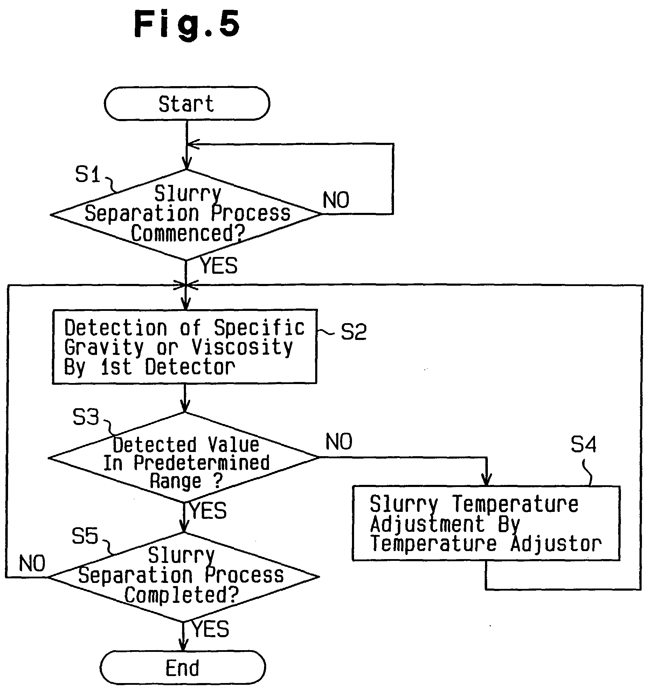

The adjustment of the slurry temperature that is carried out during the used slurry separation process will now be described with reference to the flowchart of Fig. 5. The adjustment is executed by the CPU 84 based on a control program stored in the ROM 85.

If it is confirmed that the slurry separation process has been commenced in step S1, the CPU 84 proceeds to step S2. At step S2, the CPU 84 detects the nature (specific gravity or viscosity) of the primary separation liquid, which is sent to the second decanter 47 from the first decanter 46, based on the detection signals sent from the first detector 92.

Subsequently, at step S3, the CPU 84 judges whether or not the detection value indicating the nature of the primary separation liquid is within a predetermined range, which is stored in the RAM 86. For example, if the specific gravity of the primary separation liquid is detected, it is judged whether or not the detection specific gravity value is within the range of 1.00 to 1.05. If the viscosity of the primary separation liquid is detected, it is judged whether or not the detected viscosity value is within the range of 50cp to 120cp (centipoise).

If the detection value is not in the predetermined range, the CPU 84 proceeds to step S4 and controls the temperature adjustor 81 to increase or decrease the temperature of the used slurry, which is sent to the first decanter 46, so that the detection value enters the predetermined range. Afterward, the CPU 84 returns to the step S2 and performs steps S2 to S4 repeatedly until the value detected by the first detector 92 enters the predetermined range.

For example, if the viscosity of the primary separation liquid is detected and the value of the detected viscosity is higher than the predetermined value, the temperature of the used slurry is increased to decrease the viscosity of the used slurry. On the other hand, if the value of the detected viscosity is lower than the predetermined value, the temperature of the used slurry is decreased to increase the viscosity of the used slurry. The predetermined value is determined in accordance with the type of slurry being used, the setting conditions of the decanters 46, 47, and other parameters such that satisfactory separation is carried out by the decanters 46, 47.

If the detection value is within the predetermined range in step S3, the CPU 84 proceeds to step S5 and judges whether or not the slurry separation process has been completed. Steps S2 to S5 are repeatedly performed by the CPU 84 until the slurry separation process is completed.

As described above, in this embodiment, the first detector 92 detects the nature (specific gravity or viscosity) of the primary separation liquid recovered by the first decanter 46. Furthermore, the temperature of the used slurry is adjusted to control the viscosity of the used slurry such that the detection value is maintained within the predetermined range. This keeps the separating efficiency of the first decanter 46 and the second decanter 47 in the separating/recovering mechanism constant. Thus, recyclable abrasive grains and dispersing liquid is efficiently recovered from the used slurry.

The structure is simple since only the temperature of the used slurry, which is sent to the separating/recovering mechanism 40, is required to be adjusted by the temperature adjustor 81 and the CPU 84, which controls the temperature adjustor 81.

The recovery of abrasive grains is performed by the decanter 46, while the recovery of dispersing liquid is performed by the decanter 47. Accordingly, the rotating speeds of the decanters 46, 47 may be set independently to values that are appropriate for the recovery of abrasive grains or dispersing liquid.

The number of preparing tanks 54 may be only one. In this case, the supply tank 16 may be eliminated, and the slurry prepared in the single preparing tank 54 may directly be sent to the slurry tanks 12 of the wire saws 11.

The recovery tank 24 may be eliminated, and used slurry may directly be drawn into the metering tank 34 from the slurry tanks 12 of the wire saws 11.

An aqueous dispersing liquid may be employed lieu of the oleaginous dispersing liquid. In such case, the appropriate range for the nature of the slurry (specific gravity or viscosity) must be altered.

The second decanter 47 may be eliminated, and the system may be changed to one that recovers only abrasive grains.

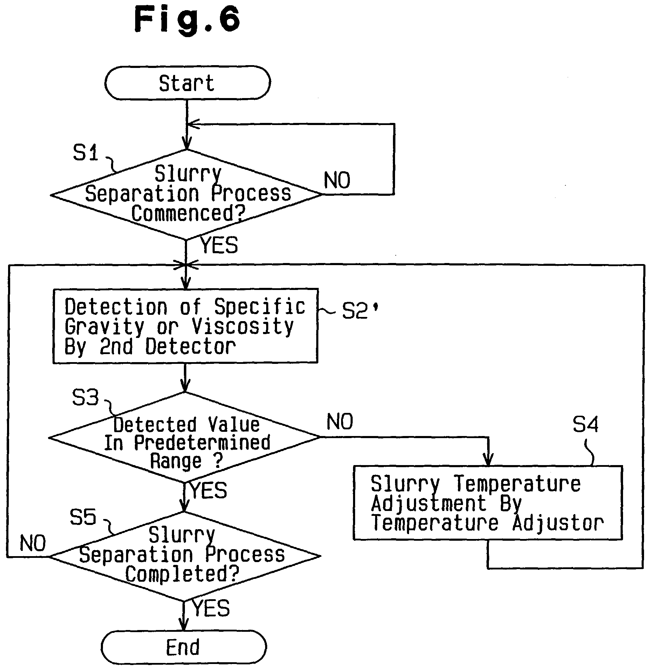

In a second embodiment, which is illustrated in Fig. 6, step S2 in the flowchart of Fig. 5 is replaced by step S2'. At step S2', the CPU 84 detects the nature (specific gravity or viscosity) of the secondary separation liquid, which is recovered by the second decanter 47 based on the detection signals sent from the second detector 93. For example, if the specific gravity of the secondary separation liquid is detected, it is judged whether or not the value of the detected specific gravity is within the range of 0.92 to 0.99 in the following step S3. If the viscosity of the secondary separation liquid is detected, it is judged whether or not the value of the detected viscosity is within the range of 30cp to 70cp in step S3. The advantages of this embodiment are the same as that of the embodiment illustrated in Fig. 5.

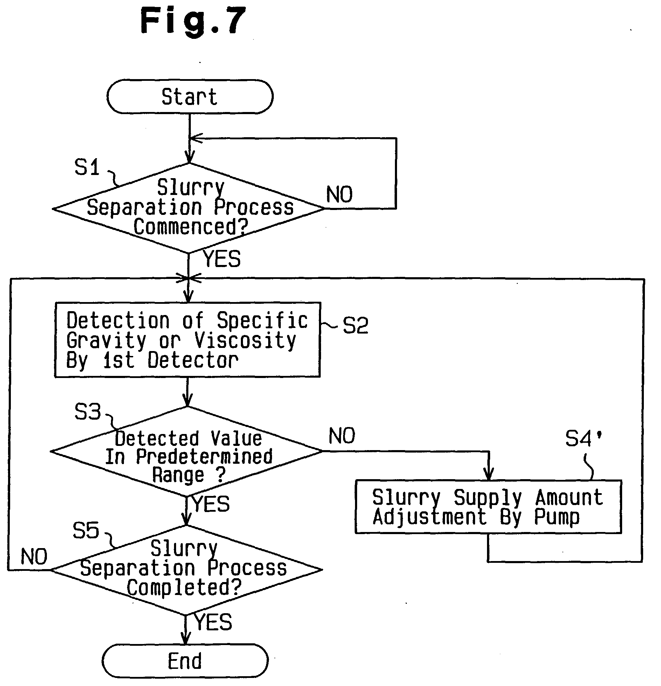

In a third embodiment, which is illustrated in Fig. 7, step S4 in the flowchart of Fig. 5 is replaced by step S4'. At step S4', the CPU 84 controls the pump 45 to increase or decrease the amount of the used slurry sent to the first decanter 46 such that the detection value indicating the nature of the primary separation liquid is within the predetermined range. An inverter controlled mohno pump may be employed as the pump 45.

The structure is simple since only the amount of the used slurry, which is sent to the separating/recovering mechanism 40, is required to be adjusted by the pump 45 and the CPU 84, which controls the pump 45.

The viscosity of the slurry is correlated with the amount of solids (abrasive grains and impurities) included in the slurry. Therefore, by adjusting the amount of used slurry sent to the first decanter 46 in accordance with the viscosity of the primary separation liquid, the amount of the solids sent to the first decanter 46 is constant. Accordingly, the load applied to the two decanters 46, 47 is substantially constant, and the decanters 46, 47 constantly perform satisfactory separation.

In a fourth embodiment, which is illustrated in Fig. 7, step S2 in the flowchart of Fig. 25 is replaced by step S2'. Step S2' is identical to step S2' of Fig. 6. The advantages of this embodiment are the same as that of the embodiment illustrated in Fig. 7.

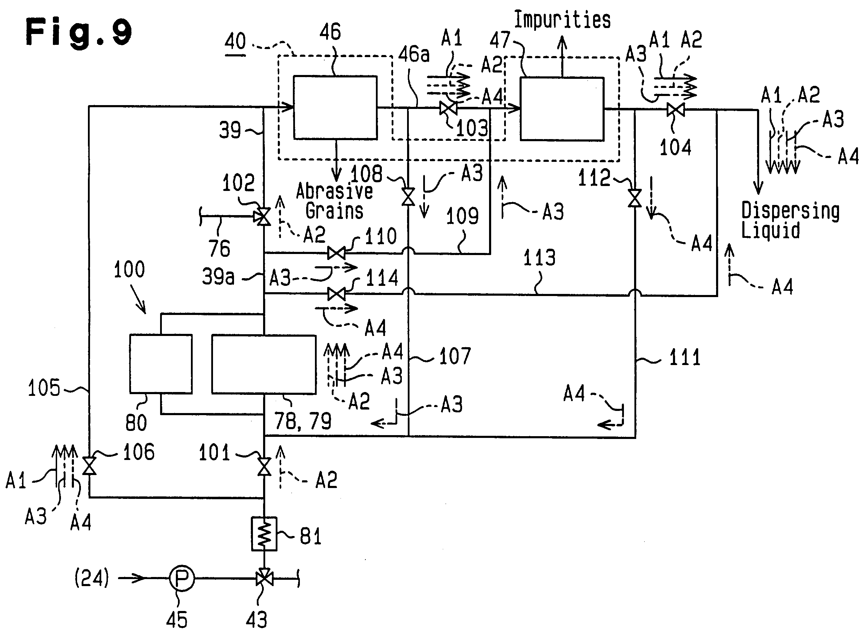

In a fifth embodiment illustrated in Fig. 9, part of the slurry managing system of the embodiment illustrated in Figs. 1 to 3 is changed. The changed parts are shown schematically. In Fig. 9, the same reference numerals are given to those components that are the same as the corresponding components of the managing system illustrated in Figs. 1 to 3.

As shown in Fig. 9, the common passage 39a, which serves as the transfer passage 39 and the circulation passage 76, extends between the valve 43 and a second valve 102 (corresponding to the valve 44 of Fig. 2). The circulation passage 76 extends from the second valve 102 toward the preparing tanks 54 (Fig. 2). A first valve 101 is arranged in the common passage 39a upstream of the detector 100, which includes the specific gravity gage 78, the flow rate gage 79, and the viscosity gage 80. A third valve 103 is arranged in the passage 46a extending from the first decanter 46 toward the second decanter 47. A fourth valve 104 is arranged in a dispersing liquid discharge passage (corresponding to the discharge passage 47a of Fig. 3) extending from the second decanter 47.

A bypass passage 105, which bypasses the first valve 101, the detector 100, and the second valve 102, extends between the common passage 39a downstream of the temperature adjustor 81 and the separating/recovering mechanism 40. A fifth valve 106 is arranged in the bypass passage 105.

A first ingoing passage 107 extends between the passage 46a upstream of the third valve 103 and the common passage 39a upstream of the detector 100. A sixth valve 108 is arranged in the first ingoing passage 107. A first outgoing passage 109 extends between the common passage 39a downstream of the detector 100 and the passage 46a downstream of the third valve 103. A seventh valve 110 is arranged in the first outgoing passage 109.

A second ingoing passage 111 extends between the dispersing liquid discharge passage of the second decanter 47 and the common passage 39a upstream of the detector 100. An eighth valve 112 is arranged in the second ingoing passage 111. A second outgoing passage 113 extends between the common passage 39 downstream of the detector 100 and the downstream side of the fourth valve 104. A ninth valve 114 is arranged in the second outgoing passage 113.

The first to ninth valves 101 to 104, 106, 108, 110, 112, 114 are selectively opened and closed to switch the flow passage. In accordance with the selected flow passage, the detector 100 sequentially detects the nature (specific gravity, flow rate, and viscosity) of the used slurry, the primary separation liquid, which is centrifuged by the first decanter 46, and the secondary separation liquid, which is centrifuged by the second decanter 47. In other words, the detector 100 functions as the first detector 92 and the second detector 93 of Fig. 3.

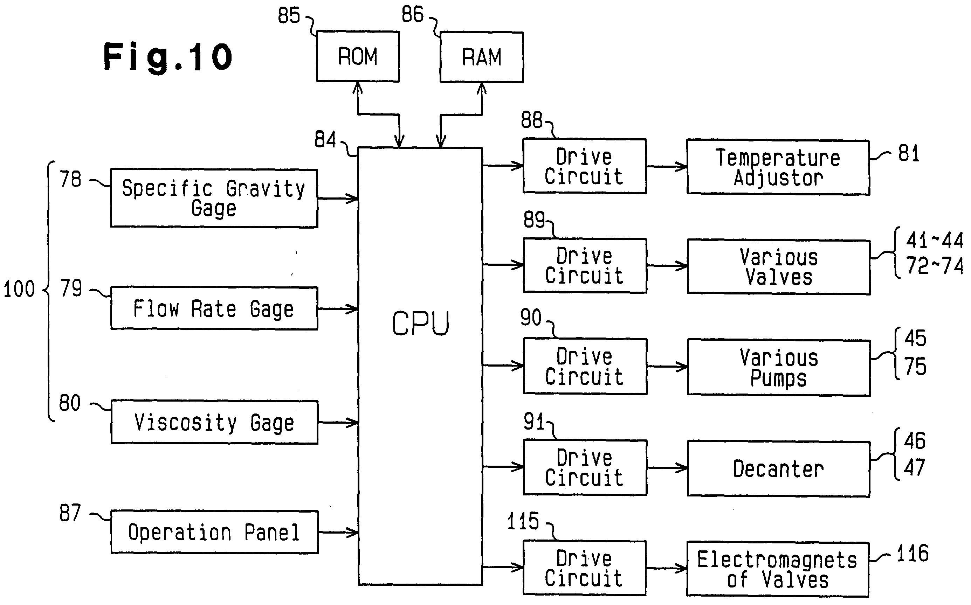

The electric structure of the above slurry managing system will now be described with reference to Fig. 10. The same reference numerals are given to those components that are the same as the corresponding components of the managing system illustrated in Fig. 4. As shown in Fig. 10, the CPU 48 receives detection signals from the specific gravity gage 78, the flow rate gage 79, and the viscosity gage 80, and operation signals from an operation panel 87. The CPU 84 also sends actuation signals to switching electromagnets 116, each of which are provided for one of the first to ninth valves 101 to 104, 106, 108, 110, 112, 114, by way of a drive circuit 115.

When used slurry is sent to the separating/recovering mechanism 40 or when the slurry in the preparing tank 54 (Fig. 2) is circulated through the circulation passage 76, the CPU 84 detects the specific gravity, the flow rate, and the viscosity of the slurry prior to separation with the detector 100. The CPU 84 then stores the detection results in the RAM 86.

The CPU 84 also switches the flow passage with the first to ninth valves to detect the specific gravity, the flow rate, and the viscosity of the primary separation liquid, which is centrifuged by the first decanter 46, with the detector 100. The CPU 84 then stores the detection results in the RAM 86. Furthermore, the CPU 84 switches the flow passage with the first to ninth valves to detect the specific gravity, the flow rate, and the viscosity of the secondary separation liquid, which is centrifuged by the second decanter 47, with the detector 100. The CPU 84 then stores the detection results in the RAM 86.

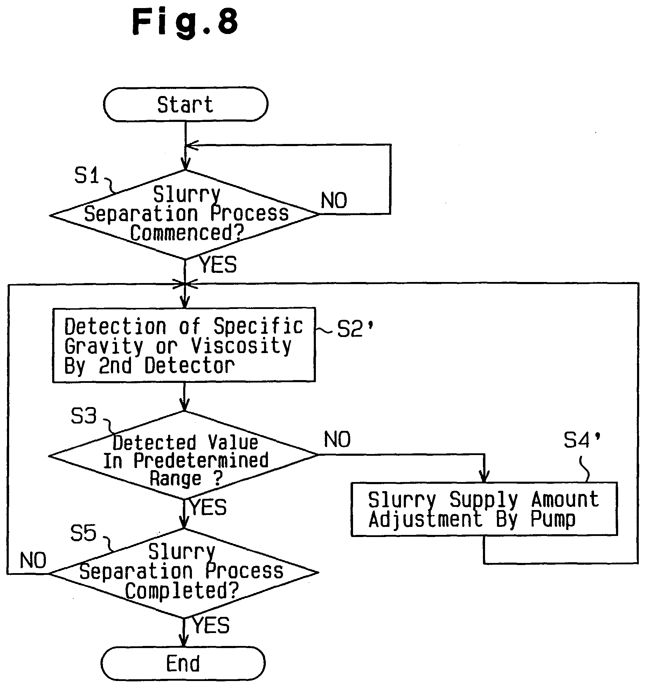

The CPU 84 displays these detection values on an indicator provided on the operation panel 87. The CPU 84 further uses these detection results to adjust the temperature or the supply amount of the used slurry by following one of the flowcharts illustrated in Figs. 5, 6, 7, and 8.

The operation of the slurry managing system of this embodiment will now be described. Normally, during the slurry separation process, the third to fifth valves 103, 104, 106 are opened, while the remaining first, second, and sixth to ninth valves 101, 102, 108, 110, 112, 114 are closed. In this state, the slurry used by each wire saw 11 is guided to the separating/recovering mechanism 40 from the recovery tank 24 (Fig. 1) through the bypass passage 105 without passing through the detector 100, as shown in Fig. 9 by solid line arrows A1. The recyclable abrasive grains and secondary separation liquid, or purified dispersing liquid, are recovered from the used slurry by the first decanter 46 and the second decanter 47 and then returned to the preparing tanks 54 (Fig. 2).

During the slurry separation process, the CPU 84 switches the first to ninth valves 101 to 104, 106, 108, 110, 112, 114 every predetermined time period to sequentially detect the nature (specific gravity, flow rate, and viscosity) of the used slurry, the primary separation liquid, and the secondary separation liquid.

When detecting the nature of the used slurry, only the first to fourth valves 101 to 104 are opened. The remaining fifth to ninth valves 106, 108, 110, 112, 114 are closed. This transfers the used slurry through the detector 100, the first decanter 46, and the second decanter 47, as shown in Fig. 9 by dotted-line arrows A2. Accordingly, the specific gravity gage 78, the flow rate gage 79, and the viscosity gage 80 send detection signals related to the specific gravity, the flow rate, and the viscosity of the used slurry to the CPU 84.

When detecting the nature of the primary separation liquid, only the fourth to seventh valves 104, 106, 108 are opened. The other valves 101 to 103, 112, 114 are closed. This transfers the used slurry through the bypass passage 105, the first decanter 46, the first ingoing passage 107, the detector 100, the first outgoing passage 109, and the second decanter 47, as shown in Fig. 9 by single-dot-line arrows A3. Accordingly, the specific gravity gage 78, the flow rate gage 79, and the viscosity gage 80 send detection signals related to the specific gravity, the flow rate, and the viscosity of the primary separation liquid, which is separated in the first decanter 46, to the CPU 84.

When detecting the nature of the secondary separation liquid, or the recyclable dispersing liquid, only the third, fifth, eighth, and ninth valves 103, 106, 112, 114 are opened. The other valves 101, 102, 104, 108, 110 are closed. This transfers the used slurry through the bypass passage 105, the first decanter 46, the second decanter 47, the second ingoing passage 111, the detector 100, and the second outgoing passage 113, as shown in Fig. 9 by double-dot-line arrows A4. Accordingly, the specific gravity gage 78, the flow rate gage 79, and the viscosity gage 80 send detection signals related to the specific gravity, the flow rate, and the viscosity of the recyclable dispersing liquid, which is separated in the second decanter 47, to the CPU 84.

As described above, in this embodiment, the nature of the used slurry, the primary separation liquid, and the secondary separation liquid are detected sequentially with a just a single set of the specific gravity gage 78, the flow rate gage 79, and the viscosity gage 80 by switching the flow passage of the slurry with a plurality of valves. This minimizes the number of detectors for detecting the nature of the slurry and simplifies the detecting structure.

Although a number of embodiments have been described here, it should be apparent to those skilled in the art that the present invention may be embodied in many other specific forms without departing from the spirit or scope of the invention. Therefore, the present examples and embodiments are to be considered as illustrative and not restrictive, and the invention is not to be limited to the details given herein, but may be modified within the scope and equivalence of the appended claims.

## Claims

1. A managing system for managing slurry used to cut a workpiece, wherein the slurry includes a dispersing liquid and abrasive grains, the managing system including a separating means (40) for executing a separation process on the slurry after the slurry has been used to recover at least recyclable abrasive grains from the used slurry, wherein a product of the separation process is a separation liquid, the managing system being characterized by:
a detecting means (92; 93; 100) for detecting a property of the separation liquid; and
an adjusting means (81) for adjusting the temperature of the used slurry prior to delivery to the separating means (40) in accordance with the property detected by the detecting means (92; 93; 100).

2. The managing system according to claim 1 characterized in that the detecting means (92; 93; 100) detects at least one of the specific gravity and the viscosity of the separation liquid.

3. The managing system according to claim 1 characterized in that the separating means (40) applies centrifugal force to the slurry to separate components in the slurry.

4. The managing system according to any one of claims 1 to 3, wherein, after the slurry has been used, the slurry further includes impurities that are finer than the abrasive grains, wherein the separating means (40) includes:
a first separating means (46) for centrifugally separating a mixture of impurities and dispersing liquid from the used slurry to recover recyclable abrasive grains from the slurry, wherein the mixture is the separation liquid; and
a second separating means (47) for centrifugally separating impurities from the mixture to recover recyclable dispersing liquid from the mixture.

5. The managing system according to any one of claims 1 to 3, wherein, after the slurry has been used, the slurry further includes impurities that are finer than the abrasive grains, wherein the separating means (40) includes:
a first separating means (46) for centrifugally separating a mixture of impurities and dispersing liquid from the used slurry to recover recyclable abrasive grains from the slurry; and
a second separating means (47) for centrifugally separating impurities from the mixture to recover recyclable dispersing liquid from the mixture, wherein the recovered dispersing liquid is the separation liquid.

6. A managing system for managing slurry used to cut a workpiece, wherein the slurry includes a dispersing liquid and abrasive grains, the managing system including a separating means (40) for executing a separation process on the slurry after the slurry has been used to recover at least recyclable abrasive grains from the used slurry, wherein a product of the separation process is a separation liquid, the managing system being characterized by:
a detecting means (92; 93; 100) for detecting a property of the separation liquid; and
an adjusting means (45) for adjusting the amount of the used slurry delivered to the separating means (40) in accordance with the property detected by the detecting means (92; 93; 100).

7. The managing system according to claim 6 characterized in that the detecting means (92; 93; 100) detects at least one of the specific gravity and the viscosity of the separation liquid.

8. The managing system according to claim 6 characterized in that the separating means (40) applies centrifugal force to the slurry to separate components in the slurry.

9. The managing system according to any one of claims 6 to 8, wherein, after the slurry has been used, the slurry further includes impurities that are finer than the abrasive grains, wherein the separating means (40) includes:
a first separating means (46) for centrifugally separating a mixture of impurities and dispersing liquid from the used slurry to recover recyclable abrasive grains from the slurry, wherein the mixture is the separation liquid; and
a second separating means (47) for centrifugally separating impurities from the mixture to recover recyclable dispersing liquid from the mixture.

10. The managing system according to any one of claims 6 to 8, wherein, after the slurry has been used, the slurry further includes impurities that are finer than the abrasive grains, wherein the separating means (40) includes:
a first separating means (46) for centrifugally separating a mixture of impurities and dispersing liquid from the used slurry to recover recyclable abrasive grains from the slurry; and
a second separating means (47) for centrifugally separating impurities from the mixture to recover recyclable dispersing liquid from the mixture, wherein the recovered dispersing liquid is the separation liquid.

11. A managing method for managing slurry used to cut a workpiece, wherein the slurry includes a dispersing liquid and abrasive grains, the managing method characterized by:
executing a separation process on the slurry after the slurry has been used to recover at least recyclable abrasive grains from the used slurry, wherein a product of the separation process is a separation liquid;
detecting a property of the separation liquid; and
adjusting the temperature of the used slurry prior to the separation process in accordance with the detected property.

12. A managing method for managing slurry used to cut a workpiece, wherein the slurry includes a dispersing liquid and abrasive grains, the managing method characterized by:
executing a separation process on the slurry with a separating means (40) after the slurry has been used to recover at least recyclable abrasive grains from the used slurry, wherein a product of the separation process is a separation liquid;
detecting a property of the separation liquid; and
adjusting the amount of the used slurry delivered to the separating means (40) in accordance with the detected property.
